# EUROPÄISCHE PATENTANMELDUNG

(11) **EP 0 919 130 A2**
(43) Veröffentlichungstag der Anmeldung: **02.06.1999**
(21) Anmeldenummer: 98122816.6
(22) Anmeldetag: 01.12.1998
(51) Int. Cl.: A21C 15/04, A21B 3/13

(54) **Schnittenblech**

(30) Priorität: 01.12.1997 DE 19753238
(71) Anmelder: Gehring, Wilhelm, 40674 Langenfeld-Fuhrkamp (DE)
(72) Erfinder: Gehring, Wilhelm, 40674 Langenfeld-Fuhrkamp (DE)
(74) Vertreter: Bergen, Klaus, Dipl.-Ing.

(57) **Zusammenfassung**

Schnittenblech (1), insbesondere für Backwaren, aus einem Boden (2), zwei Seitenblechen (3) und zwei Querblechen (4, 5), von denen mindestens eins (4) lösbar mit dem Boden (2) verbunden ist.

## Beschreibung

Die Erfindung betrifft ein Schnittenblech, insbesondere für Blechkuchen, das aus einem Boden und jeweils zwei diesen begrenzenden Quer- sowie Seitenblechen besteht.

Schnittenbleche dienen als Träger für Backwaren sowohl während der Backzubereitungszeit, während des Backvorgangs als auch während des sich anschließenden Verkaufs der Backwaren. Dazu müssen sie zunächst ein Abfließen der fließfähigen Komponenten der Backwaren während der Zubereitung verhindern. Des weiteren ist eine Stabilisierung der fertigen Backware beispielsweise des Blechkuchens während eines Transportes zur Verkaufsstätte erforderlich.

Das wird dadurch erreicht, daß der überwiegend rechteckige Boden des Schnittenblechs an seinen äußeren Kanten von einem erhöhten Rand umgeben ist.

Andererseits werden bestimmte Arbeitsgänge, wie beispielsweise das Schneiden des Backgutes oder das Entnehmen des fertigen Backgutes vom Schnittenblech erleichtert, wenn zumindest eine der äußeren Kanten des Bodens keinen erhöhten Rand aufweist. Das wird dadurch erreicht, daß zumindest einer der erhöhten Ränder lediglich lösbar mit dem Schnittenblech verbunden ist und nach dem Backvorgang entfernt werden kann.

Es sind Schnittenbleche bekannt, bei denen zwei parallel verlaufende Seitenbleche, sowie ein Querblech unlösbar mit dem Boden des Schnittenblechs verbunden sind. In die Seitenbleche ist auf der dem unlösbar mit dem Boden verbundenen Querblech entgegengesetzten Seite jeweils eine über einen Teil der Höhe sich erstreckende Nut eingebracht. Das zweite, lösbar mit dem Schnittenblech zu verbindende Querblech weist im Bereich seiner Enden je eine entsprechende Nut auf, so daß Querblech und Schnittenblech über die Nuten ineinandergesteckt werden können und zwar derart, daß die untere Längsseite des Querblechs mit dem Boden abschließt.

Derartige Schnittenbleche haben den Nachteil, daß das Einbringen der üblicherweise im Randbereich der Bleche befindlichen Nuten einen schmalen Steg zur Folge hat, der leicht abbrechen oder verbiegen kann. Diese Instabilität (Verformung) führt zum einen zu einer erschwerten Handhabung der Bleche, da das Einsetzen der Querbleche in verbogene Seitenbleche nur schwer möglich ist, und zum anderen bei einem unkorrekten Zusammenfügen von Schnittenblech-Boden und Querblech, d.h. Verbleiben einer Lücke zwischen Boden und Querblech, zum Abfließen fließfähiger Komponenten der Backwaren vom Blech. Ein weiterer Nachteil besteht darin, daß bei der Herstellung der Schnittenbleche zum Einbringen der Nuten weitere Arbeitsschritte und vor allem zusätzliche Werkzeuge erforderlich sind.

Aus dem deutschen Gebrauchsmuster 93 15 338.4 sind weiterhin Schnittenbleche bekannt, bei denen die Querbleche durch Halter mit den parallel verlaufenden Seitenblechen verbunden werden, welche sowohl lösbar als auch unlösbar mit den Seitenblechen verbunden sein können.

Bei diesen Haltern handelt es sich um zusätzliche, an den parallelen Seitenblechen zu befestigende Bauteile. Diese zusätzlichen Bauteile bringen einen erhöhten Herstellungsaufwand mit sich, da sie durch aufwendige geometrische Formen gekennzeichnet sind und mittels entsprechender Elemente und/oder Arbeitsschritte mit den Seitenblechen verbunden werden müssen.

Darüber hinaus behindern die Halter ein reibungsloses Entnehmen der Backwaren vom Blech, denn die teilweise unlösbar mit den Seitenblechen verbundenen Halter erschweren nach dem Entfernen des lösbaren Querbleches einen ungehinderten Zugriff auf das und entnehmen vom Blech. Da zwischen den Seitenblechen und Haltern zusätzliche Kanten und Hohlräume vorhanden sind, in die die fließfähigen Komponenten der Backwaren dringen und festbacken, ist das Lösen der Backware vom Schnittenblech auch nicht ohne weiteres möglich. Die Reinigung dieser Bleche ist ebenfalls sehr aufwendig, da sich zwischen Halter und Blech schwer zu entfernende Reste anhäufen. Zudem ist es möglich, daß sich bei der Reinigung Wasser zwischen dem Halter und dem Schnittenblech ansammelt, welches zum Rosten des Bleches sowie zu Problemen bei der Erfüllung von Lebensmittelvorschriften führen kann.

Vor diesem Hintergrund liegt der Erfindung das Problem zugrunde, ein Schnittenblech zu schaffen, welches sich einfach herstellen und zusammensetzen läßt, die nötige Stabilität während des Gebrauchs aufweist sowie ein einfaches Reinigen ermöglicht.

Die Lösung besteht in den Merkmalen des Hauptanspruchs. In einen bevorzugten Ausführungsbeispiel zeichnen sich die erfindungsgemäßen Führungen durch eine wellenförmige Ausgestaltung aus. Die in die Seitenbleche eingebrachten Wellen verlaufen parallel zueinander und senkrecht zum Boden des Schnittenblechs.

Zur Erfüllung der Aufgabe sind mindestens zwei, im Querschnitt vorzugsweise prismatische oder dreieckige Wellen erforderlich, zwischen denen das lösbare Querblech gehalten wird. Es ist jedoch auch denkbar, daß mehr als zwei Wellen in die Seitenbleche eingebracht werden, die es ermöglichen, das Querblech in unterschiedlichen Positionen auf dem Schnittenblech zu arretieren.

Unter "Einformen" wird hier jeglicher Bearbeitungsschritt an Blechen verstanden, der eine bleibende Änderung der Form der Bleche zur Folge hat, wie beispielsweise Tiefziehen oder Pressen, ohne daß eine spanende oder schneidende Bearbeitung erforderlich ist.

Dieser Lösung haftet der Vorteil an, daß die Schnittenbleche einfach hergestellt werden können, denn es ist lediglich ein Umformschritt zur Schaffung einer mit den Seitenblechen einstückigen Haltevorrichtung für Querbleche notwendig. Darüber hinaus gefährden die beispielsweise wellen- oder rillenförmigen Führungen an den Seitenblechen die Stabilität des Schnittenblechs nicht, denn die Gefahr des Verbiegens oder Abbrechens besteht deshalb nicht, weil die Seitenbleche lediglich umgeformt und nicht gestanzt werden. Ein weiterer Vorteil ist darin zu sehen, daß sich die erfindungsgemäßen Schnittenbleche einfach reinigen lassen, denn die Seitenbleche weisen keine Kanten oder Hohlräume mit den oben genannten Nachteilen auf, und sich beim Spülen kein Wasser, was zu den oben aufgeführten Auswirkungen führen könnte, ansammeln kann.

Es ist denkbar, daß sämtliche den Rand des Schnittenblechs bildende Bleche separat hergestellt und anschließend drei der Randbleche mit dem Boden unlösbar verbunden werden. In einer bevorzugten Ausführungsform sind zwei Seitenbleche sowie ein Querblech einstückig mit dem Boden verbunden; sie werden durch Abkanten in ihre richtige Position - bevorzugt senkrecht zum Boden - gebracht. Lediglich ein Querblech, welches lösbar mit dem Blech zu verbinden ist, wird über die erfindungsgemäßen Führungen mit dem Schnittenblech zusammengefügt.

Es ist aber auch denkbar, daß zwei Querbleche lösbar mit dem Schnittenblech verbunden sind und so ein Zugang zur Backware von zwei Seiten ermöglicht wird.

Im folgenden wird die Erfindung anhand eines in der Zeichnung dargestellten Ausführungsbeispiels näher erläutert. Es zeigen;
- Fig. 1:: Eine Draufsicht auf ein Schnittenblech mit einem eingesetzten Querblech; und
- Fig. 2:: eine Seitenansicht eines Schnittenblechs.

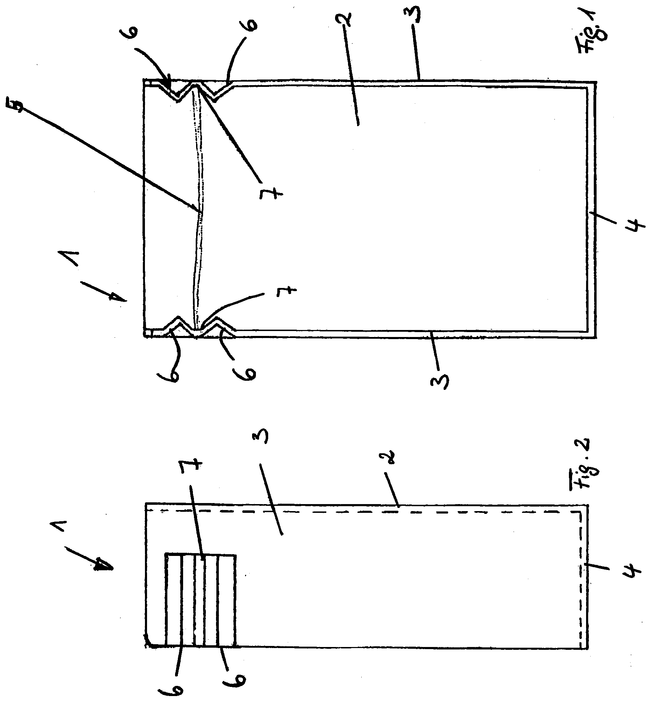

Das in Fig. 1 dargestellte Schnittenblech 1 besteht aus einem Boden 2, zwei damit unlösbar verbundenen Seitenblechen 3 sowie einem mit dem Boden 2 unlösbar verbundenen Querblech 4. Des weiteren gehört zum Schnittenblech 1 ein herausnehmbares Querblech 5.

Zur Führung und Halterung des Querblechs 5 zwischen den Seitenblechen 3 in einer Arbeitsposition senkrecht zum Boden 2, sind in die Seitenbleche 3 auf der dem unlösbar mit dem Boden verbundenen Querblech 4 gegenüberliegenden Seite, nicht weit beabstandet von der freien Stirnkante der Seitenbleche 3 je zwei parallele Wellen 6 eingebracht. Im dargestellten Ausführungsbeispiel sind die Wellen so in die Seitenbleche 3 eingebracht, daß sie sich - von oben gesehen - lediglich im Bereich über der Grundfläche des Bodens 2 des Schnittenblechs 1 befinden; die tiefste Stelle zwischen jeweils zwei Wellen, der Grund 7, ragt ebenfalls nicht über die Grundfläche des Bodens 2 hinaus.

Eine Anordnung der Wellen, die über die Grundfläche des Bodens 2 hinausragt, ist selbstverständlich technisch auch denk- und durchführbar.

Höhe und insbesondere Länge des Querblechs 5 werden den Abmessungen der Wellen 6 angepaßt; die Länge muß dem Abstand der beiden gegenüberliegenden Wellengründe 7 voneinander entsprechen, während die Höhe flexibel und in Abhängigkeit von der Art des Backguts gewählt werden kann.

Fig. 2 ist zu entnehmen, daß sich die im Querschnitt dreieckigen oder prismatischen Wellen 6 nicht über die komplette Höhe der Seitenbleche 3 erstrecken. Es sind jedoch auch Ausführungsbeispiele denkbar, in denen dies der Fall ist.

Außerdem ist es möglich, daß auch das Querblech 4 lediglich lösbar vom Schnittenblech 1 sein und dann ebenfalls durch entsprechende erfindungsgemäße wellenförmige Führungen mit diesem verbunden werden könnte.

In einem weiteren nicht dargestellten Ausführungsbeispiel weisen die Seitenbleche 3 eine Vielzahl paralleler Wellen 6 auf, so daß die Positionen der Querbleche 5 beliebig gewählt werden können.

## Patentansprüche

1. Schnittenblech (1), insbesondere für Backwaren, aus
- einem Boden (2),
- zwei Querblechen (4,5), von denen mindestens eins lösbar mit dem Boden (2) verbunden ist und
- zwei Seitenblechen (3), mit mindestens einer eingeformten, stabilitätsfördernden Führung (6,7) für mindestens ein Querblech (5).

2. Schnittenblech nach Anspruch 1, dadurch gekennzeichnet, daß die Seitenbleche (3) einstückig mit dem Boden (2) verbunden sind.

3. Schnittenblech nach Anspruch 1 oder 2, dadurch gekennzeichnet, daß die Seitenbleche (3) und ein Querblech (4) einstückig mit dem Boden (2) verbunden sind.

4. Schnittenblech nach einem der Ansprüche 1 bis 3, dadurch gekennzeichnet, daß die Führung aus mindestens zwei parallelen, senkrecht zum Boden (2) verlaufenden, jeweils einen Grund (7) einschließenden Wellen (6) besteht.

5. Schnittenblech nach Anspruch 4, dadurch gekennzeichnet, daß die Wellen (6) prismatischen oder Dreiecksquerschnitt besitzen.

6. Schnittenblech nach Anspruch 4 oder 5, dadurch gekennzeichnet, daß sich die Wellen (6) über einen Teil und/oder die gesamte Höhe der Seitenbleche (3) erstrecken.

7. Schnittenblech nach einem der Ansprüche 1 bis 6, dadurch gekennzeichnet, daß die Wellen (6) derart in die Seitenbleche (3) eingebracht sind, daß sie seitlich nicht über die Grundfläche des Bodens (2) hinausragen.

8. Schnittenblech nach einem der Ansprüche 1 bis 7, dadurch gekennzeichnet, daß die Länge des Querbleches (5) dem Abstand der sich gegenüberliegenden Gründe (7) der Wellen (6) in den Seitenblechen (3) entspricht.
